# EUROPEAN PATENT APPLICATION

(11) **EP 4 439 133 A1**
(43) Date of publication of application: **02.10.2024**
(21) Application number: 23164375.0
(22) Date of filing: 27.03.2023
(51) Int. Cl.: G02B 3/00, G02B 21/12, G02B 27/09, G02B 21/00

(54) **A MICROSCOPE FOR UPCONVERTING NANOPARTICLES**

(71) Applicant: Lumito AB, 223 51 Lund (SE)
(72) Inventor: Lazarus, James, Gt Shelford, CB22 5EJ (GB); Johansson, Andreas, 241 36 Eslöv (SE)
(74) Representative: KIPA AB

(57) **Abstract**

A microscope for imaging a biological sample is described. The microscope includes a target position for arranging a biological sample, a light source for excitation of upconverting nanoparticles (UCNPs) staining and/or labeling at least a portion of the biological sample, a first beam path for transmitting light from the light source to the target position, an optical homogenizer arranged in said first beam path for transforming a beam profile from the light source to a top hat profile, and a 2D-detector arranged for detecting light emitted back from the excited UCNPs.

## Description

### TECHNICAL FIELD

The present disclosure relates to a microscope configured to provide an improved image of a sample being stained and/or labeled using upconverting nanoparticles (UCNP). In particular the microscope is a fluorescent microscope and the samples are preferably biological samples biological cells or tissues. The microscope may be used in areas such as histopathology, or cytology, such as cytopathology, such as, for instance immunohistochemistry (IHC) or immunocytochemistry (ICC).

### BACKGROUND

In histology, such as histopathology, or cytology, such as cytopathology, several techniques are used to study and analyse biological cells or tissues, for instance immunohistochemistry (IHC) or immunocytochemistry (ICC).

In immunohistochemistry, antigens, such as proteins, are detected in cells on a sample of cells or a slice of tissue. The antigens are detected by using labelled antibodies that bind to specific antigens in the biological cells or tissue. In histology, such as histopathology, or cytology, such as cytopathology, colouring or staining, for example Haematoxylin-eosin (H&E), immunohistochemistry/immunocytochemistry (IHC/ICC) or hybridizations, such as In Situ Hybridization (ISH), are conventional standard routines for diagnosing atypical biological cells, such as in areas with tumours or apoptosis. Colouring or staining, such as immunohistochemistry or immunocytochemistry, is also commonly used in basic research to understand distribution and localization of biomarkers and differentially expressed genes and proteins in different parts of biological tissue. The bond between antibodies and antigens may be visualised in different ways. The most common practice is to conjugate, for example and antibody, to an enzyme, such as peroxidase, which may catalyse a colour change in a sample. An alternative is to label the antibodies with a fluorophore, such as fluorescein or rhodamine. The uses of fluorophores are restricted due to auto-fluorescence, i.e. fluorescence from the tissue itself, and require special and time-consuming preparations of the tissue sample to be useful. When using fluorophores, the conventional and preferred procedure based on formalin fixation and paraffin embedding suffers from even higher levels of auto-fluorescence than from the unprocessed tissue.

An alternative to conventional labelling reporters for IHC/ICC and hybridization could be upconverting nanoparticles (UCNP). However, since upconverting nanoparticles (UCNP) are not yet widely adopted for use in areas such as histopathology, or cytology, such as cytopathology, such as, for instance immunohistochemistry (IHC) or immunocytochemistry (ICC), there are not yet any dedicated microscopes for imaging and analyzing the sample of biological cells or tissue.

Upconverting nanoparticles has previously been tested for molecular imaging and tomography to improve contrast and resolution due to the non-linear power dependence of the marker has previously been investigated, in for example, "Autofluorescence insensitive imaging using upconverting nanocrystals in scattering media", Can T. Xu et al, American institute of Physics, October 2008; WO 2010/128090, "High-Resolution Fluorescence Diffuse Optical Tomography Developed with Nonlinear Upconverting Nanoparticles", Can T. Xu et al. ACS nano Vol. 6, No.6 4788-4795, May 201; "Multibeam fluorescence diffuse optical tomography using upconverting nanoparticles", Haichun Liu etal, OPTICS LE'ITERS, Vol. 35, No. 5 March 1, 2010; WO 2014/006012; "Erythrocyte Membrane-Coated Upconversion Nanoparticles with Minimal Protein Adsorption for Enhanced Tumor Imaging", Lang Rao et al, ACS Appl. Mater. Interfaces 2017, 9, 2159-2168. This requires very specific type of instruments which are not developed or being suitable for histology, such as histopathology, or cytology, such as cytopathology, such as, for instance immunohistochemistry (IHC) or immunocytochemistry (ICC).

Upconverting nanoparticles have also been tested and evaluated for imaging and analyzing samples of biological cells or tissue, for example in WO 2018/224688 A1; US 2015/0004598; WO 2016/127149 A2; "808 nm Light-triggered and hyaluronic acid-targeted dualphotosensitizers nanoplatform by fully utilizing Nd3+ -sensitized upconversion emission with enhanced anti-tumor efficacy", Zhiyao Hou et al, Biomaterials 101 (2016) 32-46; "MC540 and Upconverting Nanocrystal Coloaded Polymeric Liposome for Near-Infrared Light-Triggered Photodynamic Therapy and Cell Fluorescent Imaging", Hanjie Wang et al, Appl. Mater. Interfaces 2014, 6, 3219-3225; "Single-band upconversion nanoprobes for multiplexed simultaneous in situ molecular mapping of cancer biomarkers" Lei Zhou; and Nature communications vol 6, no. 1 24 April 2015. In these documents, the imaging system used has mainly been standard fluorescence microscopes which are not adapted for efficient excitation of upconverting nanoparticles.

Hence, it would be an advantage in the field of histology, such as histopathology, or cytology, such as cytopathology, to have a microscope or imaging device adapted and developed for upconverting nanoparticles.

### SUMMARY

It is an object of the present invention to provide an improved imaging when using upconverting nanoparticles. The scope of the present invention is defined by the appended claims.

A first aspect of the disclosure relates to a microscope for imaging a biological sample, such as biological cells or tissues. The microscope includes a target position for arranging a biological sample; a light source for excitation of upconverting nanoparticles (UCNPs) staining and/or labeling at least a portion of the biological sample. The microscope my further include a first beam path for transmitting light from the light source to the target position. The microscope may further include an optical homogenizer arranged in said first beam path for transforming a beam profile from the light source to a top hat profile. The microscope may be configured for detecting light emitted back from the excited UCNPs.

In some examples of the described microscope may the light source be a laser source.

In some examples of the described microscope may the laser source have a wavelength in the near infrared (NIR) range, such as above 700nm, such as above 900nm, such as in the range 700 to 1500nm, such as of 960nm to 985nm.

In some examples of the described microscope may the beam profile on said target position has an intensity profile being a square and/or a top hat.

In some examples of the described microscope may the optical homogenizer include a Micro Lens Array and a collimating lens, such as a Bi-Convex lens or a plano-convex lens, arranged after the Micro Lens Array.

In some examples may the described microscope include an enclosure with an open beam path, and wherein the optical homogenizer is arranged in the enclosure.

In some examples of the described microscope may the enclosure be a removable module.

In some examples of the described microscope may a multimode fiber couple light from the light source to the module.

In some examples of the described microscope may the enclosure with an open beam path include a diffuser.

In some examples of the described microscope may the diffusor be vibrating or dithering.

In some examples of the described microscope may a beam block be arranged to block light transmitted through the biological sample.

In some examples of the described microscope may the target position comprises a xy-stage to move the biological sample for illuminating different portion of the biological sample.

In some examples may the described microscope include a second beam path for bright-field illumination.

A further aspect of the disclosure describes a method of imaging a biological sample stained with upconverting nanoparticles (UCNPs). the method may include:
arranging a biological sample at a target position in a microscope;
transmitting light in a beam path from a light source to the target position, wherein the light source is configured for excitation of upconverting nanoparticles (UCNPs) staining and/or labeling at least a portion of the biological sample; transforming a light beam profile of the lights source to a top-hat profile using an optical homogenizer arranged in the first beam path; and detecting light emitted back from the excited UCNPs using a 2D-detector.

An advantage with the described imaging system is that it enables illumination with a high power density or high power. A high power density is required to achieve a high exchange of emitted light from the upconverting nanoparticles which may have a low quantum yield. A high power density may also help to shorten the scanning time of the biological sample by reducing the exposure time required for each image tile.

An additional benefit of shorter exposure time may be reduced noise. Noise sources in sensors such as CCD or CMOS sensors may include dark current and read noise, which may increase with exposure duration.

Additionally, the integration time for each image tile of the biological sample may include time additional to the camera exposure time, for example for equilibration or stabilization. This may include timescales associated with stage settling, timing jitter in the control system, stabilization time of the laser or UCNP absorption or emission. A shorter integration time means that the illumination time for each spot is shortened which may assist in not heating up the sample during imaging of the sample. A shorter integration time also provides a higher through-put since each image can be scanned quicker.

A high exchange of emitted light compared to excitation light is achieved when the power density is high enough so that the upconverting nanoparticles are in an excitation state above the non-linear state where the upconverting nanoparticles exhibit a linear relationship between the excitation light and the emitted light. The power density is required for the upconverting nanoparticles to reach the linear state depends on the upconverting nanoparticles used. Generally, it can be said that the power density in most examples, has to be at least 40 W/cm2, such as in the range 40W/cm2 to 50W/cm2, such as 45W/cm2, in particular 44W/cm2 to reach the linear state.

It should be clear that the spatial emission profile of UCNP in the linear regime may in most circumstances be less sensitive to any spatial nonuniformities in the laser intensity than UCNP in a non-linear sate. Having a power density that is saturating the UCNP so that they are in linear state makes the system less sensitive for variations between particles.

A further advantage of imaging UCNP in the linear regime may be simpler post-processing. For example, any inhomogenity may be normalize with a linear operation. Thus, it should be easier to achieve absolute labelling intensity which may be important for thresholding of certain markers. In some examples, normalizing the intensity may improve "removal" of the background by a constant minimal signal threshold.

If we consider the UCNP NIR excitation signal profile for the imaged tiles as Iₑ(x,y). This excitation profile can be measured by removing one or several of the NIR blocking filters in the imaging path, to get sufficient signal levels, and then image a reflective patch or glass surface reflection from an empty glass slide area. If we then consider the UCNP emission profile for the acquired biological sample tile as Iₛ(x,y), this emission profile can then be normalize with a linear operation as Iₛ(x,y)/Iₑ(x,y).

For UCNP in a more nonlinear regime, less simple normalization approaches may be required.

The system is also designed to have a high transfer efficiency through the beam path and to handle the heat generated by the high laser output from the source. Heat may have an affect on the focus point which may be drifting due to extensive heat which hay have an affect on the components in the light path.

Further features of, and advantages with, the present invention will become apparent when studying the appended claims and the following description. The skilled person will realize that different features of the present invention may be combined to create embodiments other than those described in the following, without departing from the scope of the present invention as defined by the claims.

### BRIEF DESCRIPTION OF THE DRAWINGS

The above, as well as additional objects, features and advantages of the present invention, will be better understood through the following illustrative and non-limiting detailed description of exemplary embodiments of the present invention, wherein:
Figure 1A is a schematic drawing of an exemplary microscope according to the present disclosure;
Figure 1B illustrates an exemplary holder for slides for the microscope according to the present disclosure;
Figure 1C illustrates an exemplary holder for slides arrange in a microscope according to the present disclosure;
Figure 1D illustrates an example of a sprung sliding clip for the exemplary holder for slides according to figure 1B;
Figure 2 illustrates an exemplary schematic implementation of optical paths for a microscope according to the present disclosure;
Figures 3A to 3C illustrates an exemplary optical path for near infrared light through a microscope according to the present disclosure;
Figures 4A and 4B are illustrating exemplary implementations of an optical homogenizer according to the present disclosure;
Figure 5 illustrates an exemplary schematic implementation of an optical path for brightfield field microscopy suitable for a microscope according to the present disclosure;
Figure 6 illustrates a raytracing through an optical homogenizer according to the description; and
Figure 7 illustrates a method of imaging a biological sample stained with upconverting nanoparticles (UCNPs).

### DETAILED DESCRIPTION OF EXAMPLE EMBODIMENTS OF THE INVENTION

The present invention will now be described more fully hereinafter with reference to the accompanying drawings, in which exemplary embodiments of the invention are shown. The invention may, however, be embodied in many different forms and should not be construed as limited to the embodiments set forth herein; rather, these embodiments are provided for thoroughness and completeness. Like reference character refer to like elements throughout the description.

When imaging fluorescence particles, such as UCNPs, provides some challenges that needs to be considered and overcome to be able to provide a microscope that can be used in practice for histopathology, or cytology, such as cytopathology, such as, for instance immunohistochemistry (IHC) or immunocytochemistry (ICC). UCNP particles are generally dim and requires long exposing time. At the same time, the acquisition time needs to be minimized while the signal and dynamic range needs to be maximized. A high power density is therefore required meaning that a multimode fiber is preferred. A multimode fiber will give rise to speckles in the on the sample luminated area. The speckles may prevent that all points in a luminated area is luminated at an equal time. These challenges are solved with the herein described microscope.

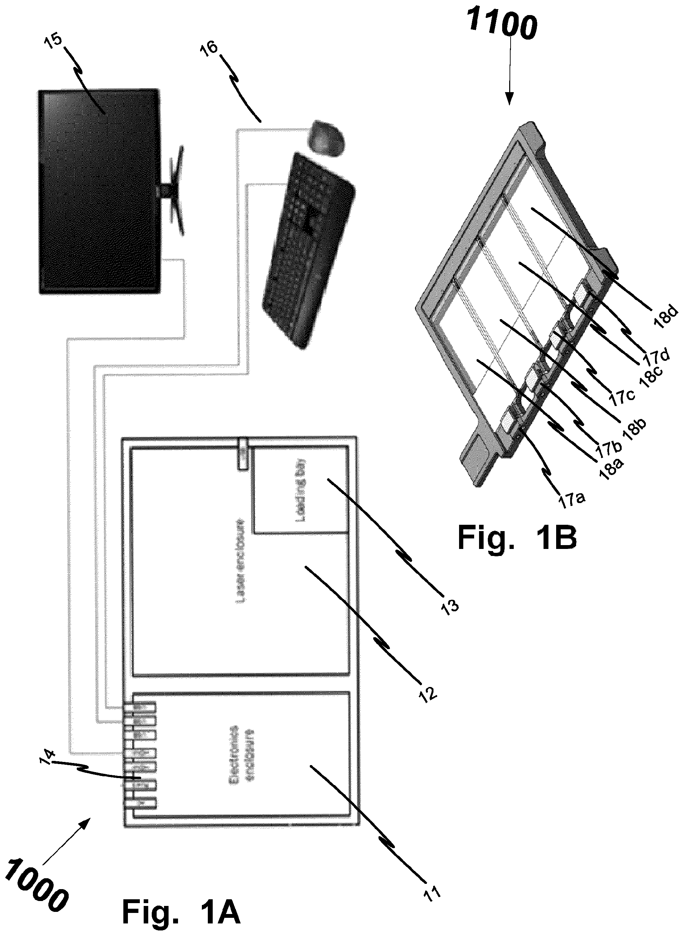

Figure 1A is a schematic drawing of an exemplary microscope 1000 according to the present disclosure. The microscope 1000 may include a housing. The housing may include different parts of the microscope 1000. The different party of the microscope may include a light enclosure 12, such as a laser enclosure, which may include the optical system. The microscope 1000 may also include an electronic enclosure 11 for the control electronics. The control electronics may also include ports, interfaces and connectors 14, such as a connector for powering the system, a LAN interface or a wireless interface for connecting the system to a network. The microscopy 1000 may include ports or interfaces for connecting the system to peripheral devices, such as an output device 15 and at least one input device 16. The output device 15 may be a display unit, such as a monitor or a screen, connected to the microscope 1000 via HDMI, display port, VGA port etc. The input device 16 may include a keyboard, a mouse or a touch screen. The input devices may be connected to the microscope via Bluetooth, USB, serial ports and/or parallel ports. The electronic enclosure 11 may include drivers for the light sources.

The electronic enclosure 11 may also include a control unit, such as a data processing device, for handling at least some imaging processing aspects or analysis of the images. The control unit or a data processing device may be implemented by special-purpose software (or firmware) run on one or more general-purpose or special-purpose computing devices. In this context, it is to be understood that each "element" or "means" of such a computing device refers to a conceptual equivalent of a method step; there is not always a one-to-one correspondence between elements/means and particular pieces of hardware or software routines. One piece of hardware sometimes comprises different means/elements. For example, a processing unit serves as one element/means when executing one instruction, but serves as another element/means when executing another

instruction. In addition, one element/means may be implemented by one instruction in some cases, but by a plurality of instructions in some other cases. Such a software controlled computing device may include one or more processing units, e.g. a CPU ("Central Processing Unit"), a DSP ("Digital Signal Processor"), an ASIC ("Application-Specific Integrated Circuit"), discrete analog and/or digital components, or some other programmable logical device, such as an FPGA ("Field Programmable Gated Array"). The data processing device may further include a system memory and a system bus that couples various system components including the system memory to the processing unit. The system bus may be any of several types of bus structures including a memory bus or memory controller, a peripheral bus, and a local bus using any of a variety of bus architectures. The system memory may include computer storage media in the form of volatile and/or non-volatile memory such as read only memory (ROM), random access memory (RAM) and flash memory. The special purpose software may be stored in the system memory, or on other removable/non-removable volatile/non-volatile computer storage media which is included in or accessible to the computing device, such as magnetic media, optical media, flash memory cards, digital tape, solid state RAM, solid state ROM, etc. The data processing device may include one or more communication interfaces, such as a serial interface, a parallel interface, a USB interface, a wireless interface, a network adapter, etc., as well as one or more data acquisition devices, such as an A/D converter. The special-purpose software may be provided to the control unit or data processing device on any suitable computer readable medium, including a record medium and a read-only memory.

The housing of the microscope 1000 may also include a loading bay 13 for the sample to be imaged or analyzed by the microscope. The loading bay 13 may include a motorized XY stage. In some examples, the loading bay 13 may also include a motorized Z stage. The XY stage and Z stage may be used for positioning the holder appropriately and provide illumination of the area to be inspected during the imaging of the sample.

The loading bay 13, may also include a load-check sensor, such as a photoelectric sensor. This sensor may be used to inspect the top surface of the XY stage and/or sample holder for items that may cause damage to the objective lens of the microscope, such as a mis-loaded slide holder. The stage should be scanned in the XY direction after loading to pass such items through the beam path of this sensor.

Light sources may be coupled from light sources into the light enclosure 12. The light sources for the near infrared light may be diode lasers coupled to the light enclosure 12 by an optical fiber, such as a multi-mode optical fiber, such as an armored multi-mode optical fibre. The light sources for the brightfield may be LEDs.

Figure 1B illustrates an exemplary slide holder 1100 for microscope slides 18a to 18d for a microscope according to the present disclosure. The microscope slides may be used to hold a biological sample, such as cells or tissue. The tissue may be section of tissue. The biological sample may be used for histochemistry, such as immunohistochemistry.

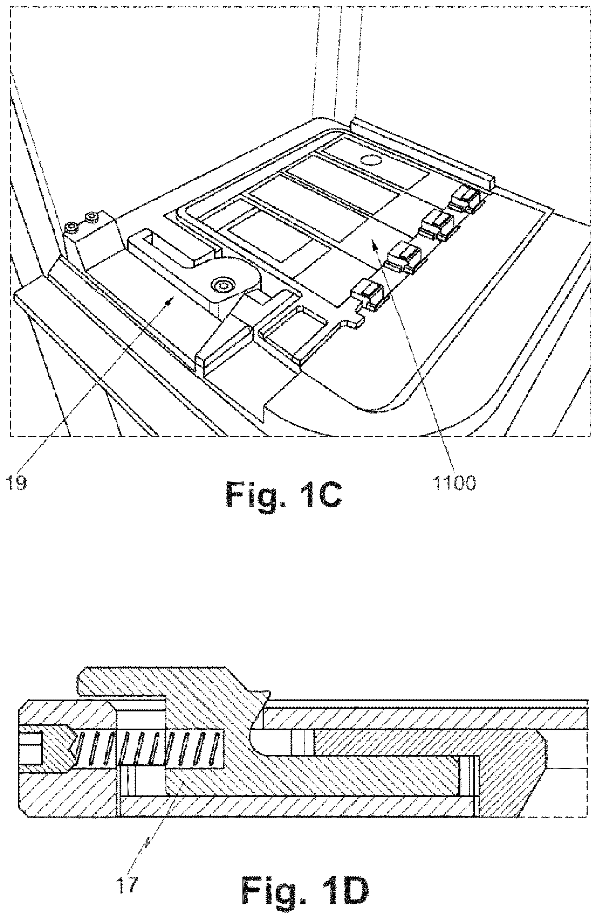

The holder 1100 may be arranged on the XY stage, such as on top of the XY stage. The XY stage is configured for receiving and holding the sample holder 1100. For example, the XY stage may be configured for securely hold the slide holder 1100 in place during operation of the microscope. This can be done using a locking cam 19, this example is illustrated in figure 1C, which securely holds the slide holder 1100 in place on the XY-stage when fully closed. This may also ensure that the slide holder 1100 is loaded squarely on the XY stage and it is level and properly bottomed-out.

The illustrated slide holder 1100 may fit up to four microscope slides 18a to d. Slide holders 1100 configured for holding less than four slides 18a to d or more than four slides 18a to d are also possible.

The slide holder 1100 may include a sprung sliding clip 17a to d, this example is illustrated in figure 1D, to ensure the microscope slides 18a to d are held in place correctly and are loaded squarely and are on level in the holder 1100.

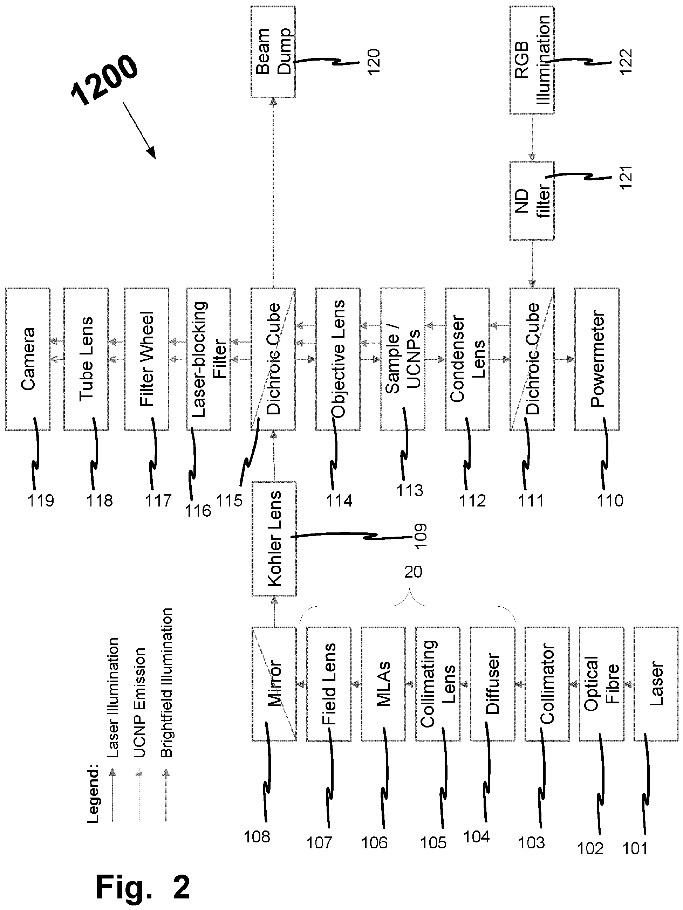

Figure 2 illustrates an exemplary schematic implementation of optical paths 1200 through a microscope according to the present invention. In the present disclosure the microscope may have one or two optical paths, one for illuminating a sample for fluorescence imaging and one for brightfield imaging using RGB illumination.

A first light path may be used for fluorescence imaging of a biological sample, such as cells of tissue, includes at least one light source 101 which may be a laser, such as a diode laser. The light source 101 may have a wavelength within the ultraviolet spectrum, visible spectrum or the near infrared spectrum. The wavelength will be selected depending on the excitation wavelength of the markers used for labeling the sample. If more than one marker is used, more than one light source 101 may be required, one for each marker.

After the at least one light source 101 of the first beam path is an optical homogenizer 20 arranged. The optical homogenizer 20 is used for transforming a beam profile from the light source 101 to a top hat also referred to as a flat-top profile. A top hat profile provides a uniform illumination of the sample compared to a gaussian profile of a light beam from a light source 101, such as a laser 101. The profile of the beam illuminating the sample will not only have a flat intensity profile but will also have a square shape. The square shape makes it easier when scanning over the sample using the XY stage and then stitch the luminated areas together since all particles in each spot have been luminated equal time.

The light from the light source 101 may be transmitted to the optical homogenizer 20 through an optical fiber 102 terminated with a collimator. The optical homogenizer 20 includes at least a Micro Lens Array (MLA) 106 and a field lens 107. A Kohler lens 109 may be used to conjugate the top-hat profile onto the sample 113 through the objective lens 114. The focal lengths of the lenses may be chosen to provide a suitable size of illumination relative to the imaging field of view and tile size. The optical homogenizer may further include a diffusor 104 and a collimating lens 105.

The MLA 106 may comprise two cylindrical lenses rotated by 90 degrees in relation to each other. A vibrating diffuser 104 may be added ahead of the MLA to provide a means for reducing the effect of laser speckle in the illumination profile. The vibration frequency may be chosen to smear the speckle profile over the exposure time. A collimating lens 105, may be added after the diffuser 104. This arrangement may increase the transfer efficiency of the MLA.

As an alternative to having a MLA 106 comprising two orthogonal cylindrical lens arrays, one or more square lens arrays may be used to define the square top hat profile. An advance with MLA over using one or more square lens arrays are that it has been found to be easier to obtain the right focal length. Further alternative means may be used to provide an even illumination profile, including the use of diffractive or refractive optical elements light guides and projecting a masked uniform portion from an expanded beam. Any effect due to non-uniform illumination may be removed using post-processing.

The order of the optical components illustrated in Figure 2 is the preferred order, other arrangements of the components may provide similar results but could have various drawbacks. Also, the optical homogenizer may comprise further components, such as an aperture stop or iris.

The light may then be transmitted via a mirror 108 to a Kohler lens 109 to a Dichroic cube 115 which is diverting the light to be transmitted through an objective lens 114 to be focused on the sample which comprises upconverting nanoparticles (UCNPs). Any light leakage from the dichroic cube 115 may be absorbed by a beam dump 120 or beam blocker. The beam dump 120 may be used to undertake that laser light transmitted by the dichroic mirror in 115 is not scattered into the imaging path where it may add noise to the image. The beam dump 120 may be used to reduce heating of the dichroic cube 115 which may have been an issue if the light was allowed to absorb only inside the cube, for example by having the walls blackened.

As an alternative to UCNP may quantum dots (QD), carbon nanotubes, carbon dots (CD) or diamondlike carbon structures.

The light from the light source 101 will excite the UCNPs which will emit light with a higher energy (lower wavelength) when returning to the ground state. The light emitted from the UCNPs may be transmitted through the objective lens 114 and through the dichroic cube 115. The emitted light may then pass through various filters, such as an illumination blocking. The illumination blocking may be a Near Infrared -blocking filter 116 and a filter wheel 117. In some examples may the filter be designed as a band-pass filter blocking the wavelength range emitted by the light source used for illuminating the UCNPs. The laser-blocking filter 116 may be used to block potential light from the light source, such as the laser, to reach the detector 119. The filter wheel 117 may be a motorized filter wheel. The filter wheel 117 may include various band pass filters selected depending on the type of UCNP used for the sample to be able to remove light falling outside of the light emitted from the particular UCNP used. Should multiple types of UCNPs be used in a sample, multiple band pass filters may be arranged in the filter wheel 118, only for each type of UPNPC used. The emitted light may then pass through a tube lens 118 before it reaches the detector 119, such as a CMOS or CCD camera. The detector 119 is preferably monochromatic to provide a high resolution with a high sensitivity. Together the objective 114 and tube lens 118 are chosen to form an image of the light emitted by UCNPs in the sample 113 onto the detector 119 at the chosen magnification and resolution. The objective and tube lens may preferably be selected for achromatic imaging across the wavelength range of interest.

Some of the light from the light source 101 may pass through the sample 113 and will the go through a condenser lens, 112, a second dichroic cube 111 before reaching a laser power meter 110 which may be placed at the bottom of the microscope. The power meter 110 may be used to monitor the laser power passing through the sample area.

A brightfield beam path may include a light source 122. The light source 122 may be in the visible wavelength range. In the illustrated example is the light source 122 a RGB illumination light source using individually controllable red, green and blue LEDs. However, the light source 122 may other types of light sources which provides illumination in the visible wavelength range. It may be advantageous for the colour gamut of the bright field images to be tuned for optimal comparison with UCNP imaging and the LEDs used in light source 122 may be chosen to define a specific colour gamut for bright field imaging.

The light used for brightfield imaging may be transmitted from the light source 122. Optionally a neutral density filter 121 may be used to attenuate the light. The light may then be transmitted through the dichroic cube 111. Condenser lenses 112 may be arranged in a typical way , for example using Kohler illumination, to illuminate the sample 113. For brightfield the light is transmitted through the sample 113. The light transmitted through the sample 113 is collected by the objective lens 114. The light may then be transmitted through a dichroic cube 115 before being transmitted through light filters 116, 117. The filter may be used to filter out the wavelength to be detected, such as a bandpass filter and/or dichroic colour filters. A tube lens 118 may be used for focusing the light for brightfield onto the detector 119, such as a CMOS or CCD camera.

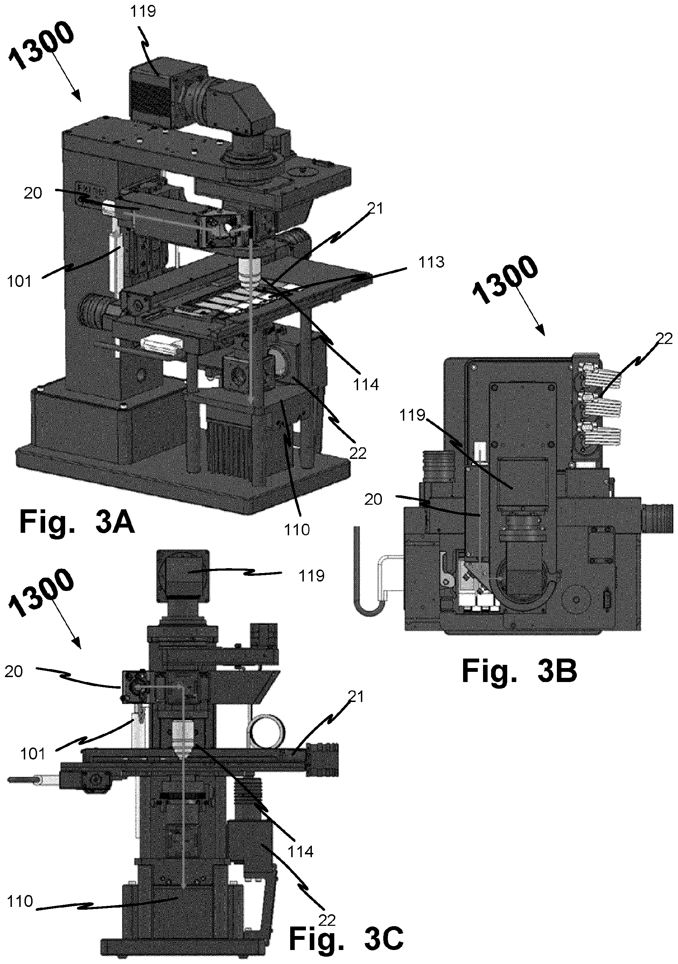

Figures 3A to 3C illustrate an exemplary optical path for near infrared light through a microscope 1300. The microscope 1300 could be a microscope illustrated in figure 2. The microscope 1300 may be configured for imaging a biological sample. The microscope 1300 may include a target position 21 which is a location in the microscope configured for arranging a biological sample 113 at, such as a position configured to receive a slide holder having slides comprising the biological sample.

The microscope 1300 includes a light source 101 for excitation of upconverting nanoparticles (UCNPs) staining and/or labeling at least a portion of the biological sample 113. The microscope 1300 includes a first beam path for transmitting light from the light source 101 to the target position 21. In the first beam path is an optical homogenizer 20 arranged. The optical homogenizer 20 is configured for transforming a beam profile from the light source 101 to a top hat profile. The microscope 1300 includes a 2D-detector arranged for detecting light emitted back from the excited UCNPs.

Light from the light source 101 which is not emitted back from the sample 113 to the detector 119 but instead is transmitted through the sample 113 may be measured using a power meter 110. The power meter 110 may be placed at the bottom of the microscope 1300. The power meter 110 may be used to monitor the laser power passing through the sample area.

The microscope may also include a second beam path for brightfield imaging. The second beam path includes a second light source 22 for the brightfield imaging. The light for brightfield imaging may be transmitted through the bottom of the microscope 1300. The light is transmitted through the sample before being detected for imaging purposes. The detector 119 may be the same detector used fluorescence imaging of a biological sample, but in some examples, it may be a dedicated detector for brightfield. The detector 119 may be a monocrop camera and each of the LEDS used as light sources 112 for brightfield may be detected separately and then be combined into a colour image. This will aid in better utilizing all light from each light source 112 in brightfield which will improve signal-to-noise, the sensitivity and the resolution.

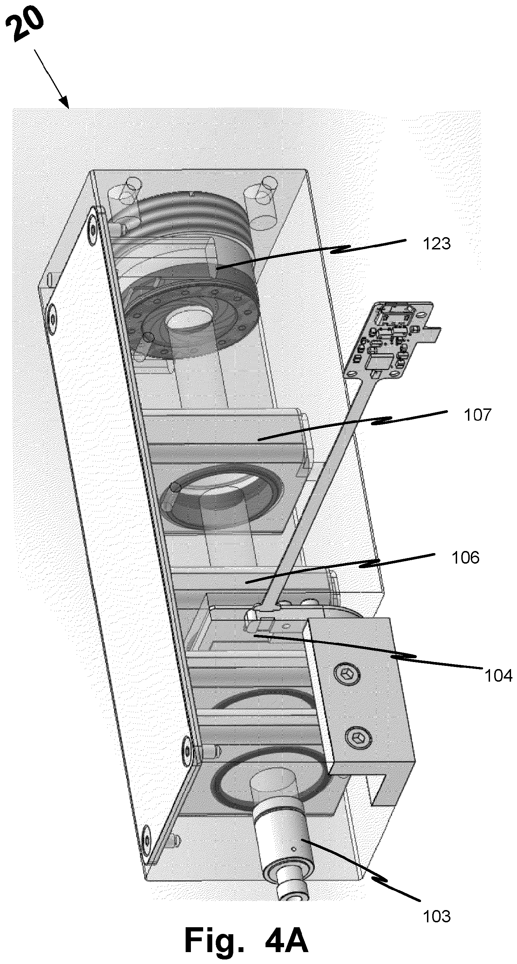

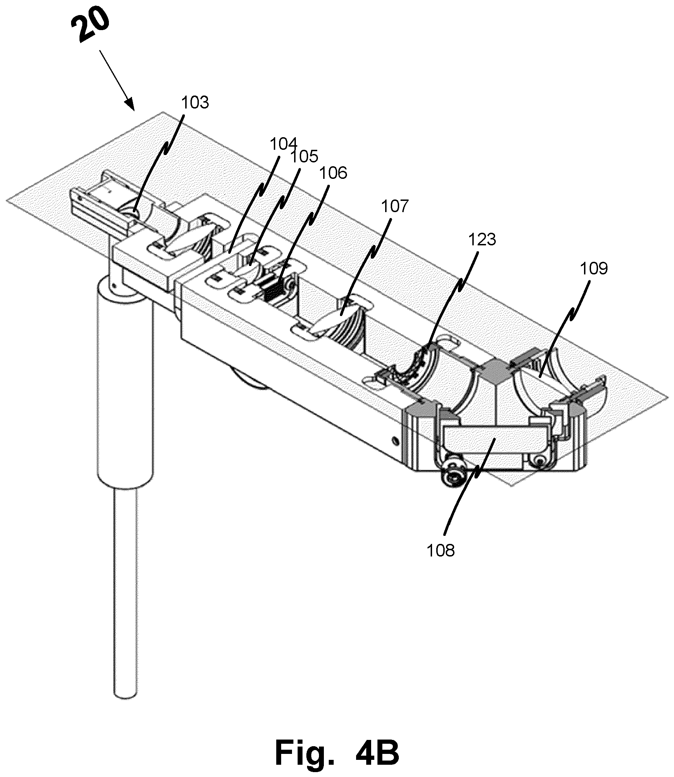

Figures 4A and 4B are illustrating exemplary implementations of an optical homogenizer 20 according to the present disclosure.

Figure 4A is configured by having the light from the light source being transmitted through a fiber to the optical homogenizer 20. The optical homogenizer 20 is an open beam path arranged in a chassis. The light from the fiber enters the optical homogenizer 20 through a fibre collimator 103. The optical homogenizer 20 may include a filter cartridge arranged after the fibre collimator 103 to define the laser emission spectrum.

The optical homogenizer 20 includes a diffuser 104 which may be vibrating or dithering to reduce laser speckle. The speckles will be reduced as they are averaging out during an integration cycle. After the diffusor may a collimating lens be arranged to collect the light from the diffusor 104.

A micro lens array (MLA) 106, or a suitable alternative such as one or more square lens arrays may be used to define the square top hat profile. Further alternative means may be used to provide an even illumination profile, including the use of diffractive or refractive optical elements light guides and projecting a masked uniform portion from an expanded beam, is arranged after the diffuser and then a field lens 107. The MLA 106, or a suitable alternative, and the field lens 107 work together to provide a square top-hat illumination profile at an intermediate plane in the optical path. A Kohler lens 109 and objective lens 114 may be used to project this plane onto the sample 113. An iris 123 may be located at the intermediate plane. The Iris is optional and may be used to run the alignment laser which is a low power laser in the visible spectrum used for aligning the components in the microscope.

Figure 4B is illustrating exemplary implementations of an optical homogenizer 20 according to the optical arrangement illustrated in figure 2. The light from the light source 101 may be transmitted by an optical fibre 102 and collimator 103 to the optical homogenizer 20. The optical homogenizer 20 includes a diffuser 104, a collimating lens 105 to collect the light from the diffusor, a Micro Lens Array (MLA) 106, or a suitable alternative such as one or more square lens arrays may be used to define the square top hat profile. Further alternative means may be used to provide an even illumination profile, including the use of diffractive or refractive optical elements light guides and projecting a masked uniform portion from an expanded beam, and a field lens 107. The choice of collimator 103 may be made based on the desired beam size at the diffuser 104 and the damage threshold. In Figure 4B, the collimator 103 is a reflective collimator. A reflective collimator may handles larger beams better and being able to focus more of the light into the homogenizer 20. It is desirable to provide a small beam on the diffusor 104 to achieve the high transmission efficiency through the homogenizer 20. However, care should be taken to avoid laser damage of the diffuser. Also, the optical homogenizer may comprise further components, such as an iris before the light exits the optical homogenizer 20 and is being reflected by a mirror 108 to a Kohler lens 109.

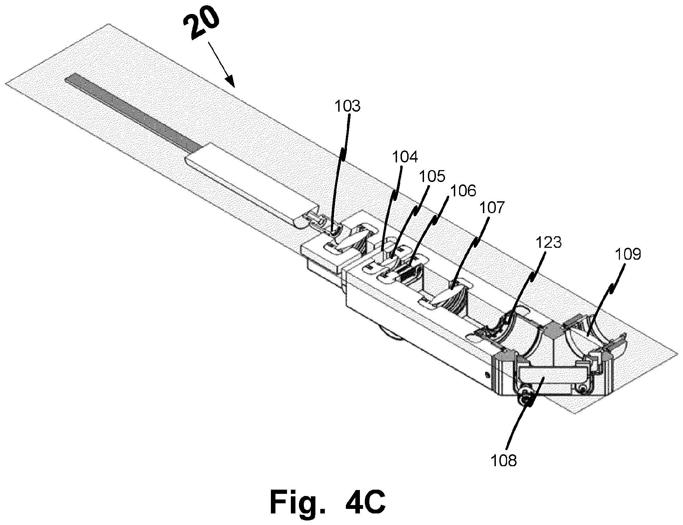

Figure 4C is illustrating exemplary implementations of an optical homogenizer 20 according to the optical arrangement illustrated in figure 2. The difference compared to Figure 4B is that the collimator 103 is a collimating lens. The collimating lens may be positioned in the connector. It is desirable to provide a small beam on the diffusor 104 to achieve the high transmission efficiency through the homogenizer 20. However, care should be taken to avoid laser damage of the diffuser. Also, the optical homogenizer may comprise further components, such as an iris before the light exits the optical homogenizer 20 and is being reflected by a mirror 108 to a Kohler lens 109.

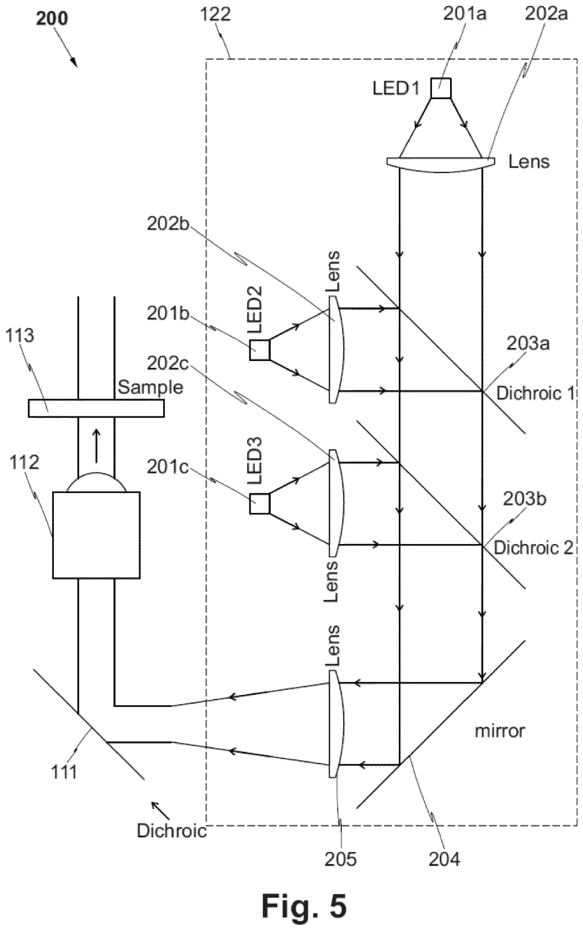

Figure 5 illustrates an exemplary schematic implementation of an optical path 200 for brightfield microscopy suitable for a microscope according to the disclosure.

The light source used for brightfield may be part of a brightfield head 122 that includes RGB LEDs 2011-201c. The light from the three LEDs 201a-201c may be coupled to a common optical axis. Each LED 201a-201c has a collimating lens 202a-202c. The first LED 201a is arranged to emit light along the optical axis. The light from the second 201b and third 201c LEDs are coupled onto the common optical axis using Dichroic mirrors 203a, 203b. Alternatively, the light from the three LEDs 201a-201c may be coupled into a cavity, which may be spherical in geometry, or the three LEDS 201a-201c may be positioned inside the cavity, which may be spherical in geometry. The cavity may be arranged to provide a spatially uniform illumination from the LEDs for illumination by multiple scattering events off the inner surface. Light may be collected from the output port of the cavity and transmitted into the bright field illumination path via the dichroic cube 111.

As illustrated in figures 3A to 3C, the light for bright field is being transmitted from the bottom of the microscope. The light may be coupled into the microscope by a mirror 204 and/or a lens 205. The light may then be transmitted through a condenser lens 112 arranged to render a divergent beam from a point source into a parallel or converging beam to illuminate the sample 113. In the present arrangement, a dichroic mirror is arranged to couple the light out from the brightfield head and to the condenser lens. A dichroic mirror 111 may be used to allow the light for excitation of the UCNPs to be transmitted through the mirror to a power meter, as previously described.

The implementation of the combination of the fluorescence imaging and brightfield imaging with , at least partially, shared optical paths makes it possible to perform true multiplexing and detect both fluorescence and brightfield images from the same section of biological sample without removing the sample form the microscope.

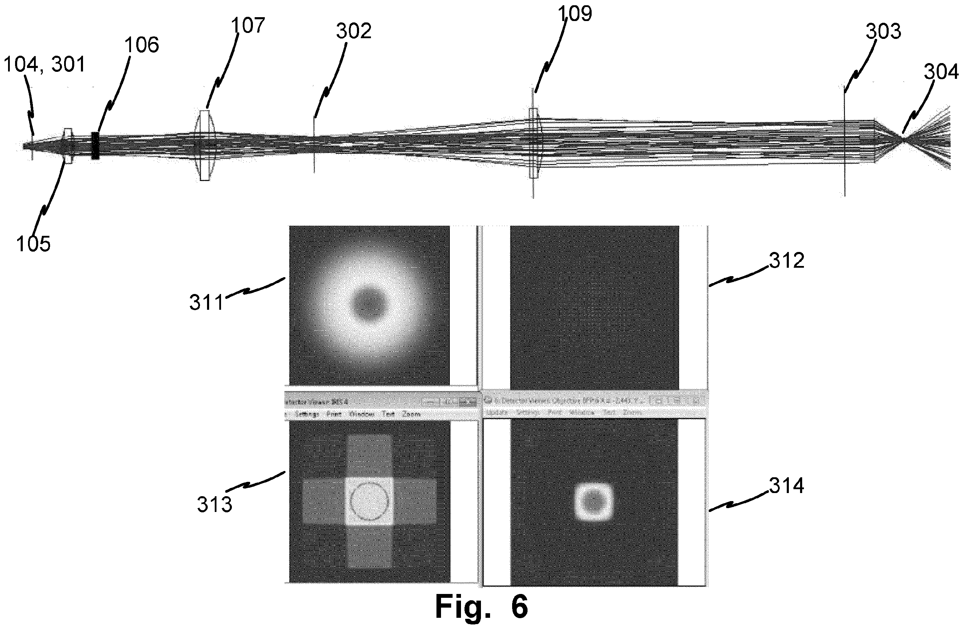

Figure 6 illustrates a raytracing simulation modelled using Zemax through an optical homogenizer according to the description. An input laser beam with Gaussian intensity is incident onto the MLA 106. The input position is at the diffusor 104. The MLA 106 and field lens 107 are arranged to form a square top hat intensity profile at an intermediate plane 302, which is conjugated by the Kohler lens 109 and objective 114 onto a plane which is coincident with the sample 113. This ray trace example components up to and including the diffuser 104. The output of the diffuser 104 is approximated as a Source Gaussian with 1/e² beam diameter = 6.6mm and divergence angle = 8.5 degrees. The MLAs 106 are modelled as a single square grid micro lens array. The objective lens 114 is modelled as a single paraxial lens. Modelled intensity profiles are represented as colour maps at the input (diffuser) 301 corresponding to colour map 311, the intermediate plane 302 corresponding to colour map 313, the objective back focal plane 303 corresponding to beam profile 313 and the object plane 304 corresponding to beam profile 312.

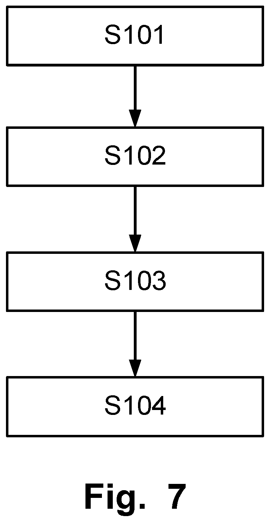

Figure 7 illustrates a method of imaging a biological sample stained with upconverting nanoparticles (UCNPs). The method may include the steps of:
S101, arranging a biological sample at a target position in a microscope;
S102, transmitting light in a beam path from a light source to the target position, wherein the light source is configured for excitation of upconverting nanoparticles (UCNPs) staining and/or labeling at least a portion of the biological sample;
S103, transforming a light beam profile of the lights source to a top-hat profile using an optical homogenizer arranged in the first beam path; and
S104, detecting light emitted back from the excited UCNPs using a 2D-detector. The method may be used with any configuration of a microscope with a homogenizer described herein.

As used herein, the singular forms "a", "an" and "the" are intended to include the plural forms as well, unless expressly stated otherwise. It will be further understood that the terms "includes," "comprises," "including" and/or "comprising," when used in this specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present. Furthermore, "connected" or "coupled" as used herein may include wirelessly connected or coupled. As used herein, the term "and/or" includes any and all combinations of one or more of the associated listed items.

While the embodiment of the present invention as described and illustrated herein, those of ordinary skill in the art will readily envision a variety of other means and/or structures for performing the functions and/or obtaining the results and/or one or more of the advantages described herein, and each of such variations and/or modifications that are deemed to be within the scope of the present invention as defined by the claims.

## Claims

**1.** An optical homogenizer for a microscope configured for imaging a biological sample, said optical homogenizer comprises:
a module configured to be arranged in a beam path of said microscope between a light source and said sample, and wherein said module is an enclosure with an open beam path which includes optical components configured to transform a beam profile of said light source to a top hat profile.

**2.** A microscope for imaging a biological sample, the microscope comprises:
a target position for arranging a biological sample;
a light source for excitation of upconverting nanoparticles (UCNPs) staining and/or labeling at least a portion of the biological sample;
a first beam path for transmitting light from the light source to the target position;
an optical homogenizer arranged in said first beam path for transforming a beam profile from the light source to a top hat profile;
a 2D-detector arranged for detecting light emitted back from the excited UCNPs.

**3.** The microscope of claim 2, wherein the light source is a laser source.

**4.** The microscope of claim 3, wherein the laser source has a wavelength in the Near-Infra-Red (NIR) range, such as above 700nm, such as above 900nm, such as in the range 700 to 1500nm, such as of 960nm to 985nm.

**5.** The microscope of any of claims 2 to 4, wherein the beam profile on said target position has an intensity profile being a square.

**6.** The microscope of any of claims 2 to 5, wherein the optical homogenizer comprises a Micro Lens Array and a collimating lens, such as a Bi-Convex lens or a plano-convex lens, arranged after the Micro Lens Array.

**7.** The microscope of any of claims 2 to 6, comprising an enclosure with an open beam path, and wherein the optical homogenizer is arranged in the enclosure, such as said enclosure is a removable module.

**8.** The microscope of claim 7, wherein a multimode fiber couples light from the light source to the module.

**9.** The microscope of any of claims 7 to 8, wherein the enclosure includes a diffuser.

**10.** The microscope of claim 9, wherein the diffusor is vibrating or dithering.

**11.** The microscope of any of claims 2 to 10, wherein a beam block is arranged to block light transmitted through the biological sample.

**12.** The microscope of any of claims 2 to 11, wherein the target position comprises a xy-stage to move the biological sample for illuminating different portion of the biological sample.

**13.** The microscope of any of claims 2 to 12, comprising a second beam path for bright-field illumination.

**15.** A method of imaging a biological sample stained with upconverting nanoparticles (UCNPs), comprising:
arranging a biological sample at a target position in a microscope;
transmitting light in a beam path from a light source to said target position, wherein said light source is configured for excitation of upconverting nanoparticles (UCNPs) staining and/or labeling at least a portion of the biological sample;
transforming a light beam profile of said lights source to a top-hat profile using an optical homogenizer arranged in said first beam path; and
detecting light emitted back from the excited UCNPs using a 2D-detector.
